# EUROPÄISCHE PATENTSCHRIFT

(11) **EP 4 411 192 B1**
(45) Veröffentlichungstag und Bekanntmachung des Hinweises auf die Patenterteilung: **14.01.2026**
(21) Anmeldenummer: 23154626.8
(22) Anmeldetag: 02.02.2023
(51) Int. Cl.: F16L 37/18, F16L 37/20, F16L 37/56, H01R 13/00

(54) **VERBINDUNGSVORRICHTUNG**
COUPLING DEVICE
DISPOSITIF DE CONNEXION

(43) Veröffentlichungstag der Anmeldung: 07.08.2024
(73) Patentinhaber: SOMIC Verpackungsmaschinen GmbH & Co. KG, 83123 Amerang (DE)
(72) Erfinder: STOCKENREITER, Brigitte, 83549 Eiselfing (DE); KÖGEL, Christoph, 83134 Prutting (DE)
(74) Vertreter: Weickmann & Weickmann PartmbB

(56) Entgegenhaltungen:
- US-A- 5 984 371
- US-A1- 2021 062 949

## Beschreibung

Die Erfindung betrifft eine Verbindungsvorrichtung mit einem aktiven Verbindungsteil und einem passiven Verbindungsteil, wobei das aktive Verbindungsteil eine Anlagefläche und ein aus der Anlagefläche vorstehendes Kupplungselement umfasst, wobei das Kupplungselement mittels eines Betätigungsmechanismus in einer zur Anlagefläche im Wesentlichen orthogonal verlaufenden Verbindungsrichtung relativ zur Anlagefläche zwischen einer ausgefahrenen Freigabestellung und einer zurückgezogenen Verbindungsstellung verlagerbar ist, und wobei das passive Verbindungsteil eine zum Zusammenwirken mit der Anlagefläche bestimmte Gegenanlagefläche umfasst, wobei die Gegenanlagefläche einen seitlichen Einschnitt umfasst, der dazu ausgebildet und bestimmt ist, bei einer Annäherung des passiven Verbindungsteils und des aktiven Verbindungsteils in einer zur Verbindungsrichtung im Wesentlichen orthogonal verlaufenden Annäherungsrichtung das Kupplungselement aufzunehmen.

Derartige Verbindungsvorrichtungen werden bei der Anmelderin unter der Bezeichnung "QuickChange" zur mechanischen Verbindung von Maschinenkomponenten verwendet. Das Kuppeln von medienführenden Leitungen, beispielsweise Stromleitungen, Datenleitungen, Druckluftleitungen, Unterdruckleitungen, Hydraulikleitungen und dergleichen Leitungen mehr, muss jedoch gesondert vorgenommen werden. Dies ist mit großem Arbeitsaufwand verbunden und birgt zudem das Risiko von Fehlbedienungen.

In der Druckschrift US 2021/062949 A1 ist eine Verbindungsvorrichtung offenbart, welche ein aktives Verbindungsteil und ein passives Verbindungsteil umfasst, welche dazu eingerichtet sind, mit Hilfe von vorstehenden Kopplungselementen miteinander verbunden zu werden. Ferner wird auf die Druckschrift US 5 984 371 A hingewiesen.

Aufgabe der Erfindung ist es, die bekannte Verbindungsvorrichtung derart weiterzuentwickeln, dass sie nicht nur zur mechanischen Verbindung, sondern gleichzeitig auch zur Verbindung von Medienleitungen eingesetzt werden kann.

Diese Aufgabe wird erfindungsgemäß durch eine Verbindungsvorrichtung der eingangs genannten Art gelöst, bei welcher an einem der Verbindungsteile, dem aktiven Verbindungsteil oder dem passiven Verbindungsteil, wenigstens ein Steckerelement und an dem anderen der Verbindungsteile, dem passiven Verbindungsteil oder dem aktiven Verbindungsteil, wenigstens ein zugeordnetes Buchsenelement vorgesehen ist, wobei das wenigstens eine Steckerelement und das wenigstens eine zugeordnete Buchsenelement derart angeordnet sind, dass sie bei Annäherung der beiden Verbindungsteile in der Annäherungsrichtung miteinander medienleitend kuppelbar sind, und dass das aktive Verbindungsteil und/ oder das passive Verbindungsteil eine Halterung aufweist, welche an einem Basiselement des jeweiligen Verbindungsteils in Verbindungsrichtung um eine vorbestimmte Distanz verlagerbar angeordnet ist, und wobei an der Halterung das wenigstens eine Steckerelement und/oder das wenigstens eine Buchsenelement befestigt ist.

Erfindungsgemäß erfolgt die medienleitende Kupplung des wenigstens einen Steckerelements und des zugeordneten Buchsenelements, also die Kupplung wenigstens zweier medienführenden Leitungsabschnitte (nachstehend auch einfach "Medienleitung" genannt), die zur Führung desselben Mediums eingerichtet sind, im Zuge der Annäherung der beiden Verbindungsteile in der Annäherungsrichtung. Hierdurch steht ein Kupplungsweg zur Verfügung, der größer ist als der Verbindungsweg, den die beiden Verbindungsteile infolge der Betätigung des Betätigungsmechanismus in der Verbindungsrichtung zurücklegen, um die Anlagefläche und die Gegenanlagefläche gegeneinander anzulegen. Dies wiederum ermöglicht den Einsatz herkömmlicher handelsüblicher Stecker-Buchsen-Kombinationen, was aufgrund des Entfalls der Notwendigkeit, gesonderte Stecker-Buchsen-Kombinationen konstruieren und bereitstellen zu müssen, die Konstruktion vereinfacht und die Gestehungskosten senkt.

Hinzu kommt, dass durch die erfindungsgemäße Lösung pro auszutauschender Funktionseinheit nur noch ein Kupplungsvorgang erforderlich ist. Dies reduziert zum einen die für den Austausch der Funktionseinheit benötigte Zeit und schließt zum anderen die Gefahr einer Verwechslung der für die betreffende Funktionseinheit vorgesehenen Kupplungsstellen mit den für andere Funktionseinheiten vorgesehenen Kupplungsstellen aus.

Grundsätzlich ist zwar auch der Einsatz eines motorisch betätigbaren Betätigungsmechanismus denkbar. Insbesondere im Hinblick auf die Gestehungskosten ist es jedoch bevorzugt, dass der Betätigungsmechanismus ein von Hand betätigbarer Betätigungsmechanismus ist. Der von Hand betätigbare Betätigungsmechanismus kann beispielsweise einen Exzenterhebel-Mechanismus umfassen, wie er bei der bekannten "QuickChange"-Verbindungsvorrichtung der Anmelderin verwendet wird.

Um dabei ein mechanisches Spiel ausschließen zu können, kann vorgesehen sein, dass das Kupplungselement mittels einer Federeinheit in die Freigabestellung vorgespannt ist.

An dieser Stelle sei ergänzend darauf hingewiesen, dass der Verbindungsweg, d.h. der zwischen der Freigabestellung und der Verbindungsstellung zurückgelegte Weg des Kupplungselements bei der "QuickChange"-Verbindungsvorrichtung der Anmelderin etwa 2 mm beträgt, während der Kupplungsweg eines Steckerelements und seines zugehörigen Buchsenelements zur Herstellung der medienleitenden Kupplung durchaus bis zu 10 mm betragen kann.

Um die Gefahr einer Beschädigung der Stecker-Buchsen-Kombinationen bei deren Kupplung reduzieren oder gar vollständig vermeiden zu können, wird in Weiterbildung der Erfindung vorgeschlagen, dass an einem der Verbindungsteile, dem aktiven Verbindungsteil oder dem passiven Verbindungsteil, wenigstens ein Führungsbolzen und an dem anderen der Verbindungsteile, dem passiven Verbindungsteil oder dem aktiven Verbindungsteil, wenigstens ein zugeordnetes Führungsloch vorgesehen ist, wobei der wenigstens eine Führungsbolzen weiter von dem einen Verbindungsteil absteht als das bzw. das längste Steckerelement. Auf diese Weise kann sichergestellt werden, dass die beiden Verbindungsteile durch den Eingriff des bzw. der Führungsbolzen in das zugehörige Führungsloch bzw. die zugehörigen Führungslöcher zueinander vorjustiert werden, bevor das bzw. das erste Steckerelement mit dem ihm zugeordneten Buchsenelement in Eingriff tritt.

Zu der erfindungsgemäßen Halterung ist noch nachzutragen, dass diese auf unterschiedliche Art und Weisen an dem Basiselement des zugeordneten Verbindungsteils verlagerbar angeordnet werden kann. Beispielsweise kann eine Linearführung vorgesehen sein, über welche die Halterung an dem Basiselement verschiebbar gelagert ist. Zusätzlich oder alternativ kann zwischen der Halterung und dem Basiselement ein elastisch verformbares Material vorgesehen sein, welches im Zuge der Verbindung der beiden Verbindungsteile komprimiert wird und sich beim Lösen der Verbindung wieder entspannt. Alternativ zum Einsatz eines elastisch verformbaren Materials kann auch an die Anordnung von Druck- und/oder Zugfedern zwischen der Halterung und dem Basiselement gedacht werden.

In Weiterbildung der Erfindung wird vorgeschlagen, dass wenigstens eine Medienleitung eine nicht-fluidische Medienleitung ist, beispielsweise eine Stromversorgungsleitung und/oder eine Signalübertragungsleitung. Dabei kann die Signalübertragungsleitung sowohl als elektrische Signalübertragungsleitung als auch als optische Signalübertragungsleitung ausgebildet sein. Hierfür können wenigstens ein Steckerelement und wenigstens ein zugeordnetes Buchsenelement dazu ausgebildet sein, in einem miteinander gekuppelten Zustand eine Kupplung zur Leitung eines nicht-fluidischen Mediums herzustellen, beispielsweise um Strom zu leiten und/oder ein elektrisches Signal und/oder ein optisches Signal zu übertragen.

Zusätzlich oder alternativ kann vorgesehen sein, dass wenigstens eine Medienleitung eine fluidische Medienleitung ist, beispielsweise eine Druckluftleitung und/ oder eine Unterdruckleitung und/oder eine Hydraulikleitung. Hierfür können wenigstens ein Steckerelement und wenigstens ein zugeordnetes Buchsenelement dazu ausgebildet sein, in einem miteinander gekuppelten Zustand eine ein Fluid leitende Kupplung herzustellen, beispielsweise um Druckluft und/oder ein unter Unterdruck stehendes Fluid und/oder eine Hydraulikflüssigkeit zu leiten.

Beispielsweise für Druckluft- und/oder Unterdruckleitungen kann wenigstens ein Buchsenelement einen Dichtungsring umfassen. Zur Herstellung der medienleitenden Kupplung kann beispielsweise eine Ringfläche oder ein Ringvorsprung des zugeordneten Steckerelements in axialer oder radialer Richtung dichtend gegen den Dichtungsring angedrückt werden. Diese Art der medienleitenden Kupplung benötigt lediglich einen so kurzen Kupplungsweg, dass in Weiterbildung der Erfindung grundsätzlich auch daran gedacht werden könnte, diese medienleitende Kupplung erst im Zuge der Verbindungsbewegung der beiden Verbindungsteile herbeizuführen.

Im Hinblick auf die Gestehungskosten ist es jedoch bevorzugt, wenn das wenigstens eine Steckerelement und das wenigstens eine zugeordnete Buchsenelement Teil eines handelsüblichen Industriesteckers sind, dessen eine Hälfte in das aktive Verbindungsteil integriert ist und dessen andere Hälfte in das passive Verbindungsteil integriert ist.

Die Erfindung wird im Folgenden an einem Ausführungsbeispiel mit Bezug auf die beigefügte Zeichnung näher erläutert werden. Es stellt dar:
- Figur 1: eine perspektivische Darstellung einer erfindungsgemäßen Verbindungsvorrichtung in Freigabestellung;
- Figuren 2a bis 2d: schematische Seitenansichten verschiedener Stellungen, die das aktive und das passive Verbindungsteil im Zuge ihrer Verbindung relativ zueinander einnehmen; und
- Figur 3: eine Ansicht in Annäherungsrichtung auf das passive Verbindungsteil.

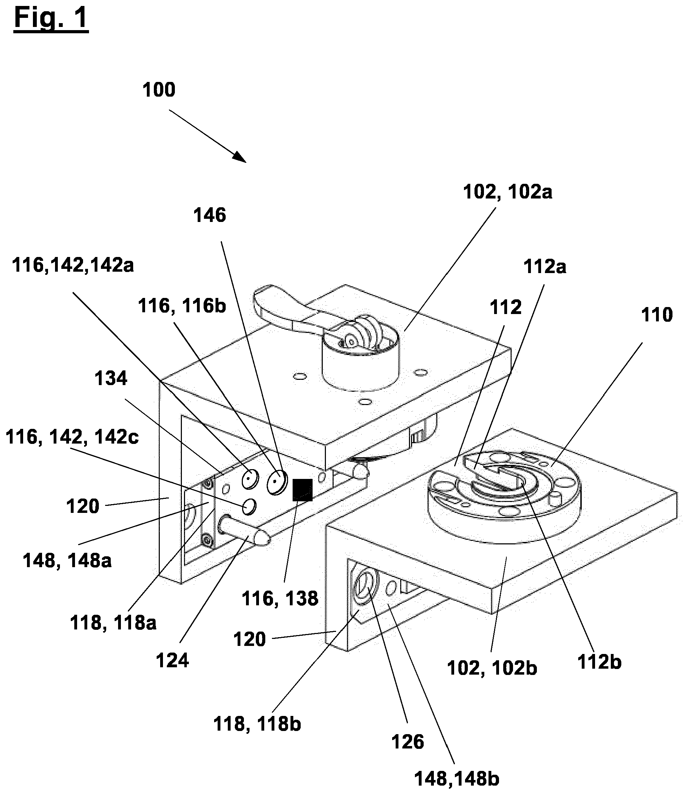

In Figur 1 ist eine erfindungsgemäße Verbindungsvorrichtung ganz allgemein mit 100 bezeichnet. Die Verbindungsvorrichtung 100 umfasst zwei Verbindungsteile 102, nämlich ein aktives Verbindungsteil 102a und ein passives Verbindungsteil 102b.

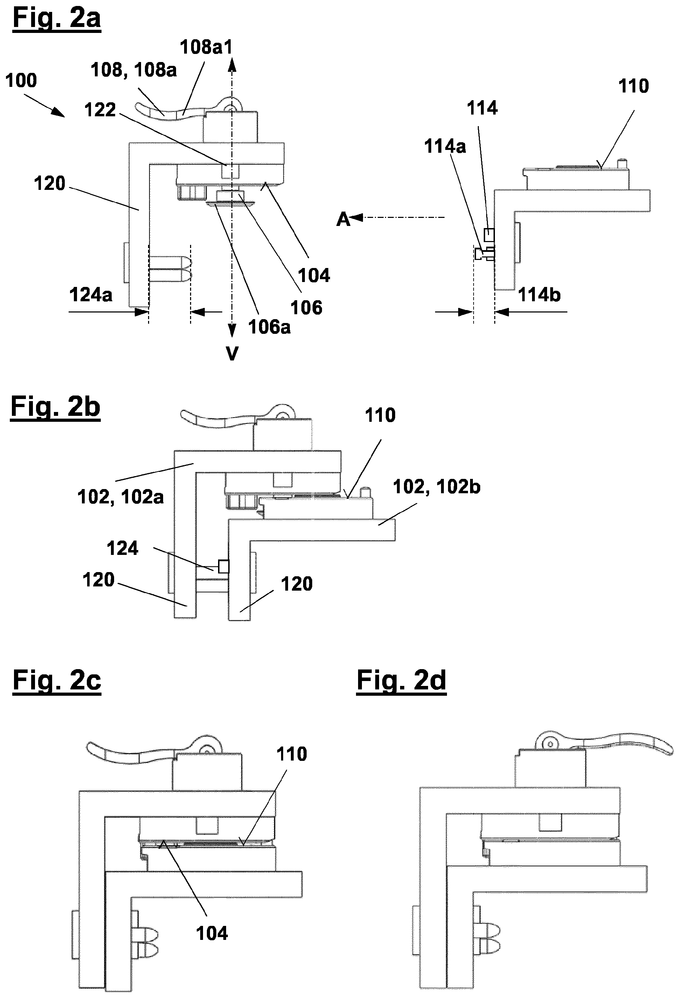

Wie beispielsweise in Figur 2a dargestellt ist, umfasst das aktive Verbindungsteil 102a eine Anlagefläche 104 und ein aus der Anlagefläche hervorstehendes Kupplungselement 106. Das Kupplungselement 106 ist mittels eines Betätigungsmechanismus 108 in einer zur Anlagefläche 104 im Wesentlichen orthogonal verlaufenden Verbindungsrichtung V relativ zu der Anlagefläche 104 zwischen einer ausgefahrenen Freigabestellung (Figur 2a) und einer zurückgezogenen Verbindungsstellung (Figur 2d) verlagerbar.

Das passive Verbindungsteil 102b umfasst eine Gegenanlagefläche 110, die dazu ausgebildet und bestimmt ist, mit der Anlagefläche 104 des aktiven Verbindungsteils 102a zusammenzuwirken. Die Gegenanlagefläche 110 umfasst einen seitlichen Einschnitt 112 (siehe Figur 1), der dazu ausgebildet und bestimmt ist, bei einer Annäherung des passiven Verbindungsteils 102b und des aktiven Verbindungsteils 102a in einer zur Verbindungsrichtung V im Wesentlichen orthogonal verlaufenden Annäherungsrichtung A (siehe Figur 2a) das Kupplungselement 106 aufzunehmen.

Beide Verbindungsteile 102 weisen wenigstens eine Kupplungsstelle auf. An einem der Verbindungsteile 102, gemäß Figur 2a dem passiven Verbindungsteil 102b, ist wenigstens ein Steckerelement 114 vorgesehen, während an dem anderen der Verbindungsteile 102, hier (siehe Figur 1) dem aktiven Verbindungsteil 102a, wenigstens ein zugeordnetes Buchsenelement 116 vorgesehen ist. Das wenigstens eine Steckerelement 114 und das wenigstens eine zugeordnete Buchsenelement 116 sind derart angeordnet, dass sie bei Annäherung der beiden Verbindungsteile 102 in der Annäherungsrichtung A miteinander medienleitend kuppelbar sind. Mit anderen Worten sind wenigstens ein Steckerelement 114 und wenigstens ein Buchsenelement 116 einander zugeordnet und dazu eingerichtet, miteinander in Eingriff zu treten und eine ein Medium leitende Kupplung herzustellen. Insbesondere können so durch die Kupplung des Steckerelements 114 und des Buchsenelements 116 zwei (nicht dargestellte) Medienleitungsabschnitte miteinander gekuppelt werden. Bereits in dieser Stelle sei darauf hingewiesen, dass es sich bei einer Kombination wenigstens eines Steckerelements 114 und wenigstens eines zugeordneten Buchsenelements 116 um herkömmliche handelsübliche Stecker-Buchsen-Kombinationen handeln kann.

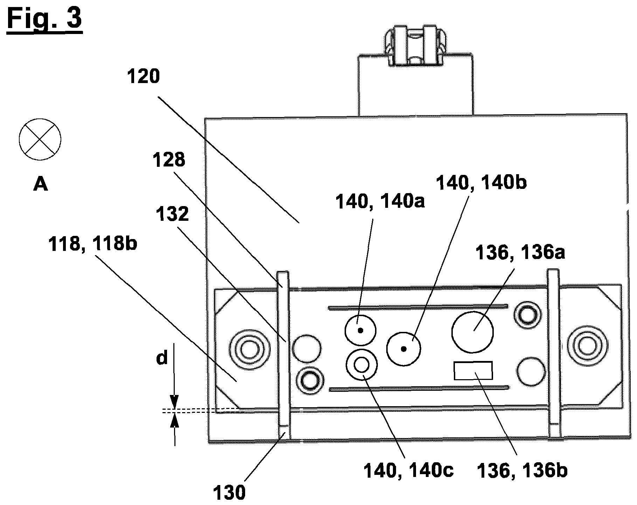

Gemäß Figur 1 weist wenigstens ein Verbindungsteil 102 eine Halterung 118 auf. Ferner weist jedes Verbindungsteil 102 ein Basiselement 120 auf. An der Halterung 118 ist wenigstens ein Steckerelement 114 und/oder ein Buchsenelement 116 befestigt. Bei dem erfindungsgemäßen Ausführungsbeispiel weist sowohl das aktive Verbindungsteil 102a eine Halterung 118a als auch das passive Verbindungsteil 102b eine Halterung 118b auf. Die Halterung 118a des aktiven Verbindungsteils 102a ist an dem zugehörigen Basiselement 120 derart angebracht, dass die Halterung 118a in Verbindungsrichtung V um eine vorbestimmte Distanz d (siehe Figur 3) verlagerbar ist.

Grundsätzlich ist es denkbar, dass die Halterungen 118 sowohl Steckerelemente 114 als auch Buchselemente 116 aufweisen. Die Halterungen 118 können aber auch nur Steckerelemente 114 bzw. nur Buchsenelemente 116 aufweisen. Im dargestellten Ausführungsbeispiel weist die Halterung 118a lediglich Buchsenelemente 116 auf, während die Halterung 118b nur Steckerelemente 114 aufweist.

Das den Betätigungsmechanismus 108 aufweisende aktive Verbindungsteil 102a ist üblicherweise fest mit einer Maschinenkomponente verbunden. Zur Vorbereitung des Kuppelns mit dem passiven Verbindungsteil 102b wird der Betätigungsmechanismus 108 in eine Freigabestellung gebracht (siehe Figur 2a). In dem dargestellten Ausführungsbeispiel ist der Betätigungsmechanismus 108 ein von Hand betätigbarer Betätigungsmechanismus, insbesondere ein Exzenterhebel-Mechanismus 108a, dessen Hebel 108a1 in die Freigabestellung verschwenkt wird. Hierdurch wird das Kupplungselement 106 in Figur 2a nach unten bewegt. Diese Bewegung kann durch die Vorspannung einer Federeinheit 122 unterstützt werden, um ein mechanisches Spiel ausschließen zu können.

Zum Kuppeln des aktives Verbindungsteils 102a und des passiven Verbindungsteils 102b wird das passive Verbindungsteil 102b in Annäherungsrichtung A an das aktive Verbindungsteil 102a herangeführt (siehe Figur 2a), bis der seitliche Einschnitt 112 des passiven Verbindungsteils 102b das Kupplungselement 106 des aktiven Verbindungsteils 102a aufnimmt (siehe Figur 2b). Durch die Aufnahme des Kupplungselements 106 in dem seitlichen Einschnitt 112 wird die Relativbewegung zwischen den beiden Verbindungsteilen 102 in Annäherungsrichtung A geführt. Zudem kann ein Hintergreifen eines Tellers 106a des Kupplungselements 106 durch einen Vorsprung 112a des seitlichen Einschnitts 112 eine Bewegung der beiden Verbindungsteile 102 relativ zueinander in Verbindungsrichtung V während der Annäherung in Annäherungsrichtung A verhindern.

Infolge der Annäherung der beiden Verbindungsteile 102 nähern sich auch das wenigstens eine Steckerelement 114 und das ihm zugeordnete Buchsenelement 116 einander in Annäherungsrichtung A an. Um hierbei Beschädigungen an dem Steckerelement 114 und/oder dem Buchsenelement 116 zu vermeiden, ist an einem der Verbindungsteile 102, in dem dargestellten Ausführungsbeispiel an dem aktiven Verbindungsteil 102a, wenigstens einen Führungsbolzen 124 angeordnet, während das jeweils andere der Verbindungsteile 102, hier das passive Verbindungsteil 102b, wenigstens ein zugeordnetes Führungsloch 126 aufweist. Wenigstens ein Führungsbolzen 124 ist dabei länger ausgebildet als das längste Steckerelement 114a. Mit anderen Worten, ist die Erstreckung 124a des Führungsbolzens 124 in Annäherungsrichtung A größer als eine Erstreckung 114b jedes der Steckerelemente 114 in Annäherungsrichtung A.

Dieser Aufbau führt dazu, dass in Annäherungsrichtung A zuerst die Führungsbolzen 124 mit den jeweils zugeordneten Führungslöchern 126 in Eingriff treten, bevor dies die Steckerelemente 114 und die Buchsenelemente 116 tun. Die weitere Annäherungsbewegung der beiden Verbindungsteile 102 in Annäherungsrichtung A wird somit nicht nur durch das Zusammenspiel des seitlichen Einschnitts 112 und dem Kupplungselement 106, sondern auch durch das Zusammenspiel von Führungsbolzen 124 mit dem zugeordneten Führungsloch 126 geführt. Insbesondere das Zusammenspiel von Führungsbolzen 124 und Führungsloch 126 verhindert eine Relativbewegung in Verbindungsrichtung V zwischen dem wenigstens einen Steckerelement 114 und dem wenigstens einen Buchsenelement 116. Gemäß dem vorliegenden Ausführungsbeispiel sind die Führungsbolzen 124 an der Halterung 118 angebracht.

Nachdem Führungsbolzen 124 und Führungslöcher 126 miteinander in Eingriff getreten sind, werden das aktive Verbindungsteil 102a und das passive Verbindungsteil 102b weiter in Annäherungsrichtung A aufeinander zu bewegt, bis das wenigstens eine Steckerelement 114 und das wenigstens eine Buchsenelement 116 miteinander gekuppelt sind (Figur 2c). In diesem Zustand liegt zudem das Kupplungselement 106 an einem Anschlag 112b des seitlichen Einschnitts 112 an, so dass eine weitere Bewegung des Kupplungselements 106 und damit auch eine Bewegung zwischen dem aktiven Verbindungsteil 102a und dem passiven Verbindungsteil 102b in Annäherungsrichtung A verhindert wird. Die Anlagefläche 104 und die Gegenanlagefläche 110 sind jedoch nach wie vor voneinander beabstandet.

Um ein Lösen der Verbindung zwischen dem wenigstens einen Steckerelement 114 und dem wenigstens einen zugeordneten Buchsenelement 116 zu verhindern, wird nun der Betätigungsmechanismus 108 betätigt. Insbesondere wird der Hebel 108a1 des Exzenterhebel-Mechanismus 108a von der in Figur 2c linken Position in die in Figur 2d rechte Position verschwenkt. Hierdurch wird das Kupplungselement 106 in Verbindungsrichtung V von der ausgefahrenen Freigabestellung, gegebenenfalls unter Überwindung der von der Federeinheit 122 ausgeübten Federkraft, in die zurückgezogenen Verbindungsstellung verlagert (siehe Figur 2d). Dies bewirkt, dass die Anlagefläche 104 des aktiven Verbindungsteils 102a und die Gegenanlagefläche 110 des passiven Verbindungsteils 102b in Verbindungsrichtung V miteinander in Anlageeingriff treten.

Ferner bewirkt das Betätigen des Betätigungsmechanismus 108 eine Verlagerung der Halterung 118a des aktiven Verbindungsteils und/oder der Halterung 118b des passiven Verbindungsteils um eine vorbestimmte Distanz d in Verbindungsrichtung V. Zur Führung dieser Verlagerungsbewegung kann eine Linearführung 128 vorgesehen sein. Hierzu weist das Basiselement 120 ein Linearführungsloch 130 auf, während an der Halterung 118 ein Linearführungsbolzen 132 angebracht ist. Durch die Bewegung des Linearführungsbolzens 132 im Linearführungsloch 130 kann die Halterung 118 in Verbindungsrichtung V um die vorbestimmte Distanz d verlagert werden.

Alternativ oder zusätzlich kann zwischen der Halterung 118 und dem Basiselement 120 ein elastisch verformbares Material 134 vorgesehen sein (siehe Figur 1). Das elastisch verformbaren Material 134 wird im Zuge der Verbindung der beiden Verbindungsteile 102 in Verbindungsrichtung V komprimiert und beim Lösen der Verbindung wieder entspannt.

Zudem kann wenigstens eine (nicht dargestellte) Medienleitung eine nicht-fluidische Medienleitung sein. Dies kann beispielsweise eine Stromversorgungsleitung und/oder eine Signalübertragungsleitung sein. Dabei kann die Signalübertragungsleitung sowohl als elektrische Signalübertragungsleitung als auch als optische Signalübertragungsleitung ausgebildet sein. Dementsprechend ist an einem Verbindungsteil 102 wenigstens ein nicht-fluidisch leitendes Steckerelement 136 vorgesehen, das zum Kuppeln von nicht-fluidischen Medienleitungen eingerichtet ist. Das andere Verbindungsteil 102 weist wenigstens ein zugeordnetes nicht-fluidisch leitendes Buchsenelement 138 auf. Figur 3 zeigt exemplarisch ein Stromversorgungssteckerelement 136a und ein Signalübertragungssteckerelement 136b.

Alternativ oder zusätzlich kann wenigstens eine (nicht dargestellte) Medienleitung eine fluidische Medienleitung sein. Entsprechend weist ein Verbindungsteil 102 wenigstens ein fluidisch leitendes Steckerelement 140 und das andere Verbindungsteil 102 wenigstens ein zugeordnetes fluidisch leitendes Buchsenelement 142 auf. Exemplarisch sind in Figur 3 ein Druckluftsteckerelement 140a und ein Druckluftbuchsenelement 142a, ein Unterdrucksteckerelement 140b sowie ein Hydrauliksteckerelement 140c dargestellt.

Zum Verbinden von Druckluft- und/oder Unterdruckleitungen kann ein Buchsenelement 116b einen Dichtungsring 146 umfassen. Zur Herstellung der medienleitenden Kupplung kann beispielsweise eine Ringfläche oder ein Ringvorsprung des zugeordneten Steckerelements in axialer oder radialer Richtung dichtend gegen den Dichtungsring 146 angedrückt werden.

Nachzutragen ist an dieser Stelle noch, dass wenigstens ein Steckerelement 114 und wenigstens ein zugeordnetes Buchsenelement 116 Teil eines handelsüblichen Industriesteckers 148 sind. Eine Hälfte 148a des Industriesteckers 148 ist in das aktive Verbindungsteil 102a integriert und die andere Hälfte 148b des Industriesteckers 146 in das passive Verbindungsteil 102b. Beispielsweise kann die Halterung 118a des aktiven Verbindungsteils 102a eine Hälfte 148a des Industriesteckers 148 und/oder die Halterung 118b des passiven Verbindungsteils 102b die andere Hälfte 148b des Industriesteckers 148 umfassen.

## Patentansprüche

1. Verbindungsvorrichtung (100) mit
einem aktiven Verbindungsteil (102a) und
einem passiven Verbindungsteil (102b),
wobei das aktive Verbindungsteil (102a) eine Anlagefläche (104) und ein aus der Anlagefläche (104) vorstehendes Kupplungselement (106) umfasst,
wobei das Kupplungselement (106) mittels eines Betätigungsmechanismus (108) in einer zur Anlagefläche (104) im Wesentlichen orthogonal verlaufenden Verbindungsrichtung (V) relativ zur Anlagefläche (104) zwischen einer ausgefahrenen Freigabestellung und einer zurückgezogenen Verbindungsstellung verlagerbar ist, und
wobei das passive Verbindungsteil (102b) eine zum Zusammenwirken mit der Anlagefläche (104) bestimmte Gegenanlagefläche (110) umfasst,
wobei die Gegenanlagefläche (110) einen seitlichen Einschnitt (112) umfasst, der dazu ausgebildet und bestimmt ist, bei einer Annäherung des passiven Verbindungsteils (102b) und des aktiven Verbindungsteils (102a) in einer zur Verbindungsrichtung (V) im Wesentlichen orthogonal verlaufenden Annäherungsrichtung (A) das Kupplungselement (106) aufzunehmen,
wobei an einem der Verbindungsteile (102; 102b), dem aktiven Verbindungsteil (102a) oder dem passiven Verbindungsteil (102b), wenigstens ein Steckerelement (114) und an dem anderen der Verbindungsteile (102; 102a), dem passiven Verbindungsteil (102b) oder dem aktiven Verbindungsteil (102a), wenigstens ein zugeordnetes Buchsenelement (116) vorgesehen ist,
wobei das wenigstens eine Steckerelement (114) und das wenigstens eine zugeordnete Buchsenelement (116) derart angeordnet sind, dass sie bei Annäherung der beiden Verbindungsteile (102; 102a; 102b) in der Annäherungsrichtung (A) miteinander medienleitend kuppelbar sind, und
wobei das aktive Verbindungsteil (102a) und/oder das passive Verbindungsteil (102b) eine Halterung (118; 118a; 118b) aufweist, welche an einem Basiselement (120) des jeweiligen Verbindungsteils (102) in Verbindungsrichtung (V) um eine vorbestimmte Distanz (d) verlagerbar angeordnet ist, und
wobei an der Halterung (118; 118a; 118b) das wenigstens eine Steckerelement (114) und/oder das wenigstens eine Buchsenelement (116) befestigt ist.

2. Verbindungsvorrichtung nach Anspruch 1,
**dadurch gekennzeichnet, dass** der Betätigungsmechanismus (108) ein von Hand betätigbarer Betätigungsmechanismus (108a) ist.

3. Verbindungsvorrichtung nach einem der Ansprüche 1 oder 2,
**dadurch gekennzeichnet, dass** das Kupplungselement (106) mittels einer Federeinheit (122) in die Freigabestellung vorgespannt ist.

4. Verbindungsvorrichtung nach einem der vorangehenden Ansprüche, **dadurch gekennzeichnet, dass** an einem der Verbindungsteile (102; 102a), dem aktiven Verbindungsteil (102a) oder dem passiven Verbindungsteil (102b), wenigstens ein Führungsbolzen (124) und an dem anderen der Verbindungsteile (102; 102b), dem passiven Verbindungsteil (102b) oder dem aktiven Verbindungsteil (102a), wenigstens ein zugeordnetes Führungsloch (126) vorgesehen ist, wobei der wenigstens eine Führungsbolzen (124) weiter von dem einen Verbindungsteil (102; 102a) absteht als das bzw. das längste Steckerelement (114a).

5. Verbindungsvorrichtung nach einem der vorangehenden Ansprüche,
**dadurch gekennzeichnet, dass** wenigstens eine Medienleitung eine nicht-fluidische Medienleitung ist, beispielsweise eine Stromversorgungsleitung und/oder eine Signalübertragungsleitung.

6. Verbindungsvorrichtung nach einem der vorangehenden Ansprüche, **dadurch gekennzeichnet, dass** wenigstens eine Medienleitung eine fluidische Medienleitung ist, beispielsweise eine Druckluftleitung und/oder eine Unterdruckleitung und/oder eine Hydraulikleitung.

7. Verbindungsvorrichtung nach Anspruch 6,
**dadurch gekennzeichnet, dass** wenigstens ein Buchsenelement (116b) einen Dichtungsring (146) umfasst.

8. Verbindungsvorrichtung nach einem der vorangehenden Ansprüche,
**dadurch gekennzeichnet, dass** das wenigstens eine Steckerelement (114) und das wenigstens eine zugeordnete Buchsenelement (116) Teil eines handelsüblichen Industriesteckers (148) sind, dessen eine Hälfte (148a) in das aktive Verbindungsteil (102a) integriert ist und dessen andere Hälfte (148b) in das passive Verbindungsteil (102b) integriert ist.

## Claims

1. A connection device (100) with
an active connecting part (102a) and
a passive connecting part (102b),
wherein the active connecting part (102a) comprises an contact surface (104) and a coupling element (106) projecting from the contact surface (104),
wherein the coupling element (106) can be displaced relative to the contact surface (104) between an extended release position and a retracted connection position by means of an actuating mechanism (108) in a connection direction (V) extending substantially orthogonally to the contact surface (104);
wherein the passive connecting part (102b) comprises a mating contact surface (110) intended to cooperate with the contact surface (104),
wherein the mating contact surface (110) comprises a lateral recess (112) configured to receive the coupling element (106) when the passive connecting part (102b) and the active connecting part (102a) approach each other in an approach direction (A) which is substantially orthogonal to the connection direction (V);
wherein at least one male connecting element (114) is provided on one of the connecting parts (102; 102b), the active connecting part (102a) or the passive connecting part (102b), and at least one associated female connecting element (116) is provided on the other of the connecting parts (102; 102a), the passive connecting part (102b) or the active connecting part (102a);
wherein the at least one male connecting element (114) and the at least one associated female connecting element (116) are arranged in such a way that they can be coupled to one another in a media-conducting manner in the approach direction (A) when both connecting parts (102; 102a; 102b) approach each other; and
wherein the active connecting part (102a) and/or the passive connecting part (102b) has a holder (118; 118a; 118b) arranged on a base element (120) of respective connecting parts (102) so as to be displaceable in the connection direction (V) by a predetermined distance (d); and
wherein the at least one male connecting element (114) and/or the at least one associated female connecting element (116) is attached to the holder (118; 118a; 118b).

2. The connection device according to claim 1, **characterized in that** the actuating mechanism (108) is a manually operable actuating mechanism (108a).

3. The connection device according to any of claims 1 or 2, **characterized in that** the coupling element (106) is biased into the release position by means of a spring unit (122).

4. The connection device according to any of the preceding claims, **characterized in that** at least one guide pin (124) is provided on one of the connecting parts (102; 102a), the active connecting part (102a) or the passive connecting part (102b), and at least one associated guide hole (126) is provided on the other of the connecting parts (102; 102b), the passive connecting part (102b) or the active connecting part (102a), wherein the at least one guide pin (124) projects further from the one connecting part (102; 102a) than the or the longest male connecting element (114a).

5. The connection device according to any of the preceding claims, **characterized in that** at least one media line is a non-fluidic media line, for example a power supply line and/or a signal transmission line.

6. The connection device according to any of the preceding claims, **characterized in that** at least one media line is a fluidic media line, for example a compressed-air line and/or a vacuum line and/or a hydraulic line.

7. The connection device according to claim 6, **characterized in that** the at least one female connecting element (116b) comprises a sealing ring (146).

8. The connection device according to any of the preceding claims, **characterized in that** the at least one male connecting element (114) and the at least one associated female connecting element (116) are part of a commercially available industrial male connector (148), one half (148a) of which is integrated into the active connecting part (102a) and the other half (148b) of which is integrated into the passive connecting part (102b).

## Revendications

1. Dispositif de raccordement (100) avec
une partie de raccordement active (102a) et
une partie de raccordement passive (102b),
dans lequel la partie de raccordement active (102a) comprend une surface d'appui (104) et un élément d'accouplement (106) dépassant de la surface d'appui (104),
dans lequel l'élément d'accouplement (106) peut être déplacé au moyen d'un mécanisme d'actionnement (108) dans une direction de raccordement (V) sensiblement orthogonale à la surface d'appui (104) par rapport à la surface d'appui (104) entre une position de libération sortie et une position de raccordement rétractée,
dans lequel l'élément de raccordement passif (102b) comprend une contre-surface d'appui (110) destinée à coopérer avec la surface d'appui (104),
dans lequel la contre-surface d'appui (110) comprend une encoche latérale (112) qui est conçue et destinée à recevoir l'élément d'accouplement (106) lors d'un rapprochement de la partie de raccordement passive (102b) et de la partie de raccordement active (102a) dans une direction de rapprochement (A) sensiblement orthogonale à la direction de raccordement (V),
dans lequel, sur l'une des parties de raccordement (102 ; 102b), la partie de raccordement active (102a) ou la partie de raccordement passive (102b), au moins un élément de fiche (114) et, sur l'autre des parties de raccordement (102 ; 102a), la partie de raccordement passive (102b) ou la partie de raccordement active (102a), au moins un élément de prise associé (116) est prévu,
dans lequel ledit au moins un élément de fiche (114) et ledit au moins un élément de prise associé (116) sont disposés de telle sorte qu'ils peuvent être couplés l'un à l'autre de manière à conduire le fluide dans la direction d'approche (A) lorsque les deux éléments de raccordement (102 ; 102a ; 102b) sont rapprochés, et
dans lequel la partie de raccordement active (102a) et/ou la partie de raccordement passive (102b) présente un support (118 ; 118a ; 118b) qui est disposé de manière déplaçable sur un élément de base (120) de la partie de raccordement respective (102) dans la direction de raccordement (V) sur une distance prédéterminée (d), et
dans lequel ledit au moins un élément de fiche (114) et/ou ledit au moins un élément de prise (116) est fixé au support (118 ; 118a ; 118b)

2. Dispositif de raccordement selon la revendication 1,
**caractérisé en ce que** le mécanisme d'actionnement (108) est un mécanisme d'actionnement (108a) pouvant être actionné à la main.

3. Dispositif de raccordement selon l'une des revendications 1 ou 2,
**caractérisé en ce que** l'élément d'accouplement (106) est précontraint dans la position de libération au moyen d'une unité à ressort (122).

4. Dispositif de raccordement selon l'une des revendications précédentes,
**caractérisé en ce qu'**au moins un boulon de guidage (124) est prévu sur l'une des pièces de raccordement (102 ; 102a), la pièce de raccordement active (102a) ou la pièce de raccordement passive (102b), et au moins un trou de guidage (126) associé est prévu sur l'autre des pièces de raccordement (102 ; 102b), la pièce de raccordement active (102a) ou la pièce de raccordement passive (102b), dans lequel ledit au moins un boulon de guidage (124) dépasse davantage de la partie de raccordement (102 : 102a) que l'élément de fiche le plus long (114a).

5. Dispositif de raccordement selon l'une des revendications précédentes,
**caractérisé en ce qu'**au moins une conduite de médium est une conduite de médium non fluidique, par exemple une ligne d'alimentation électrique et/ou une ligne de transmission de signaux.

6. Dispositif de raccordement selon l'une des revendications précédentes,
**caractérisé en ce qu'**au moins une conduite de médium est une conduite de médium fluidique, par exemple une conduite d'air comprimé et/ou une conduite à dépression et/ou une conduite hydraulique.

7. Dispositif de raccordement selon la revendication 6,
**caractérisé en ce qu'**au moins un élément de douille (116b) comprend une bague d'étanchéité (146).

8. Dispositif de raccordement selon l'une des revendications précédentes,
**caractérisé en ce que** ledit au moins un élément de fiche (114) et ledit au moins un élément de douille associé (116) font partie d'une fiche industrielle (148) disponible dans le commerce, dont une moitié (148a) est intégrée dans la pièce de raccordement active (102a) et dont l'autre moitié (148b) est intégrée dans la pièce de raccordement passive (102b).
